Europäisches Patentamt

European Patent Office

Office européen des brevets

(19)

(11) Veröffentlichungsnummer: **0 190 988**
**A2**

(12) # EUROPÄISCHE PATENTANMELDUNG

(21) Anmeldenummer: 86730019.6

(22) Anmeldetag: 03.02.86

(51) Int. Cl.⁴: **B 62 M 1/04**

(30) Priorität: 05.02.85 DE 3504239

(43) Veröffentlichungstag der Anmeldung:
13.08.86 Patentblatt 86/33

(84) Benannte Vertragsstaaten:
AT BE CH DE FR GB IT LI LU NL SE

(71) Anmelder: Pfeiffer, Ulrich
Bernauer Strasse 108A
D-1000 Berlin 49(DE)

(72) Erfinder: Pfeiffer, Ulrich
Bernauer Strasse 108A
D-1000 Berlin 49(DE)

(74) Vertreter: Lüke, Dierck-Wilm, Dipl.-Ing.
Gelfertstrasse 56
D-1000 Berlin 33(DE)

(54) Antriebsvorrichtung.

(57) Es soll eine Antriebsvorrichtung zur Umsetzung der Linearbewegung (Pfeile 17, 18) eines hin- und hergehenden Antriebselementes (14') in eine rotierende Bewegung (Pfeil 20) geschaffen werden. Hierzu sieht die Erfindung vor, daß das Antriebselement (14') beim Vorhub (17) mit dem Obertrum (3') und beim Rückhub (Pfeil 18) mit dem Untertrum (4'') der Umlauftriebe (1 bzw. 2) gekoppelt ist, wobei der Achsabstand der beiden Umlenkräder (5, 7; 6, 8) der beiden Umlauftriebe (1, 2) mindestens so groß ist wie der Vor- und Rückhub (17 bzw. 18) des Antriebselementes (14') und wobei zwei gegenüberliegende Umlenkräder (5, 6) der Umlauftriebe (1, 2) auf miteinander durch eine drehbare Welle (11) verbundenen Freilaufnaben (9, 10) gleichen Drehsinnes gelagert sind. Somit werden sowohl der Vorhub (17) als auch der Rückhub (18) des Antriebselementes (14') in eine gleichförmige Drehbewegung gleicher Drehrichtung überführt.

FIG. 2

0190988

Albrecht & Lüke, Gelfertstr. 56, D-1000 Berlin 33

## Patentanwälte
### Dipl.-Ing. Hans Albrecht ($^{1933}_{1979}$)
### Dipl.-Ing. Dierck-Wilm Lüke
European Patent Attorney

Gelfertstraße 56
D-1000 Berlin 33
Telefon: (030) 8313028
Telegramme: Patentalbrecht Berlin

| Ihr Zeichen | Ihre Nachricht | Unser Zeichen | Datum |
|---|---|---|---|
| | | 10984/L/LÜ | 5. Februar 1985 |

Ulrich Pfeiffer Ingenieur VDI, Bernauer Str. 108 A,
1000 Berlin 49

---

Antriebsvorrichtung

---

Die Erfindung bezieht sich auf eine Antriebsvorrichtung zur Umsetzung der Linearbewegung eines hin- und hergehenden Antriebselementes mittels eines endlosen Umlauftriebes, z. B. einer um zwei Umlenkräder umlaufenden Gliederkette oder eines Zahnriemens, in eine rotierende Antriebsbewegung.

Eine Antriebsvorrichtung dieser Art ist aus der DE-OS 2930989 für ein mit Muskelkraft angetriebenes Fahrzeug vorbekannt . Das Antriebselement ist hierbei eine Sitzschaukel, welche mit dem Obertrum des endlosen Umlauftriebes verbunden ist, welcher am antriebsseitigen Umlenkrad mit einer Freilaufnabe versehen ist. Eine Schaukelbewegung des Antriebselementes in Fahrtrichtung bewirkt eine Mitnahme des Umlauftriebes in Fahrtrichtung, wobei ein Vortrieb erzeugt wird. Eine Rückbewegung des Antriebselementes in der Fahrtrichtung entgegengesetzter Richtung bewirkt eine Rückführung des Umlauftriebes unter Wirkung des Freilaufes in die Ausgangsstellung. Die Hin- und Herbewegung des als Sitzschaukel
ausgebildeten Antriebselementes wird somit durch die Freilaufnabe gleichgerichtet, und es wird eine kontinuierliche
Bewegung des Fahrzeuges nach vorn oder nach hinten ermöglicht,
je nachdem wie der Freilauf mittels einer Umschaltrichtung
eingestellt ist. Nachteilig hierbei ist, daß jeweils nur ein
Arbeitshub ausgeführt wird, dem ein Leerrückhub folgt,
wodurch nur eine 50-%ige Ausnutzung der Schaukelenergie des
Antriebselementes ermöglicht wird. Außerdem ergibt sich keine
kontinuierliche Linearbewegung des Fahrzeuges, sondern eine
stoßweise Vorwärtsbewegung, welche von den für den Leerrückhub notwendigen Verlustzeiten unterbrochen ist.

Entsprechende Nachteile bestehen auch beim Kinderfahrzeug
gemäß DE-AS 10 13 193. Hier erfolgt ebenfalls nur eine
stoßweise Vorwärtsbewegung des Fahrzeuges bei einer Antriebsbewegung des Umlauftriebes in Fahrtrichtung, wohingegen
beim Leerrückhub keine Antriebskraft erzeugt wird.

Der Erfindung liegt von daher die Aufgabe zugrunde, eine
Antriebsvorrichtung der gattungsgemäßen Art zu schaffen,
mit welcher die Linearbewegung des hin- und hergehenden
Antriebselementes mittels des endlosen Umlauftriebes in
eine kontinuierliche, rotierende Antriebsbewegung umgesetzt werden kann.

Die Lösung dieser Aufgabe ergibt sich aus den kennzeichnenden
Merkmalen des Patentanspruches 1. Durch die abwechselnde
Kopplung des hin- und herbewegten Antriebselementes mit dem
Obertrum des Umlauftriebes beim Vorhub, wobei das Antriebselement vom Untertrum entkoppelt ist, und mit dem Untertrum
des Umlauftriebes beim Rückhub, wobei das Antriebselement
vom Obertrum entkoppelt ist, wird ermöglicht, daß sowohl
der Vorhub als auch der Rückhub des hin- und hergehenden
Antriebselementes in eine gleichförmige Drehbewegung gleicher
Drehrichtung überführt werden können, so daß die Energien

- 3 -     0190988

sowohl des Vorhubes als auch des Rückhubes des Antriebselementes in gleichförmige Antriebsenergie, nämlich Drehenergie überführt werden. Somit wirkt ein absolut gleichmäßiges Drehmoment auf den Umlauftrieb ein, welcher z. B.
auf die Antriebsachsen eines Fahrzeuges einwirkt. Ein solcher
Fahrzeugantrieb ist praktisch ununterbrochen ,wobei die Kürze der
Umkehrbewegung in den Endpunkten des Vor- und Rückhubes
praktisch nicht ins Gewicht fällt.

Neben der ergonomisch wirkungsvollen Muskelkraftausnutzung
des menschlichen Körpers,bei welcher die Streck- und Beugemuskeln von Armen, Beinen und Rumpf für die Erzeugung  linearer
Antriebskräfte durch Einwirkung auf das hin- und hergehende
Antriebselement eingesetzt werden, können auch Linearmotoren Verwendung  finden, deren lineare oszillierende
Antriebsbewegung in eine rotierende Drehbewegung als
Fahrzeugantrieb umgesetzt werden kann. Hier wird die
volle Nutzung der Antriebsenergie durch die geringe Masse
der Antriebsteile einen verlustarmen, tangentialen Übergang der Linearkräfte in die Drehbewegung ermöglichen.
Als Linearmotor kann z.B. ein kurbelwellenloser 2- Zylinder-
Boxermotor verwendet werden, wobei die Wirkung einer größeren
Anzahl von Zylindern gebräuchlicher Motoren , z.B. 4 , 5,
6 , 8 oder 12 Zylinder , welche u.a. notwendig sind , um
die Sinusverzerrung der Antriebsbewegung zu verringern ,
bei der erfindungsgemäßen Anwendung bereits von zwei Zylindern
erreicht bzw. sogar übertroffen wird .

In einer einfachen Ausführungsform wird nur ein Umlauftrieb
verwendet, der Magnetplatten trägt, welche mit parallel zum
Ober- und Untertrum des Umlauftriebes geführten Magnetkupplungen gekuppelt werden können oder anstelle der Magnetkupplungen mit anderen gebräuchlichen Kupplungen .

In der bevorzugten Ausführungsform sind zwei parallele Umlauftriebe vorgesehen,.wobei zwei gegenüberliegende Umlenkräder der Umlauftriebe auf miteinander durch eine drehbar
gelagerte Welle verbundenen Freilaufnaben gleichen Drehsinns
gelagert sind und wobei das Antriebselement  mit dem Obertrum des einen Umlauftriebes und mit dem Untertrum des anderen Umlauftriebes festverbunden ist . Bei jedem Doppelhub
des durch äußere oszillierende Kräfte angetriebenen Antriebselementes macht die Welle der beiden freilaufenden
Naben eine der Hin- und Herbewegung des Antriebselementes
proportionale Drehbewegung gleicher Drehrichtung, wodurch
oszillierende Linearkräfte unter Berücksichtigung maximaler
Verlustminimierung in Drehbewegung gleichbleibender Drehrichtung um einen Festpunkt umgeleitet werden.

In einer weiteren Ausführungsform läßt sich die Antriebsvorrichtung als verbesserter Tretantrieb für Fahrräder
verwenden, wobei die beiden endlosen Umlauftriebe vertikal
hochkant gestellt sind. Hierbei trägt die drehbare Welle
ein Kettenrad eines Fahrradantriebes, wobei zwischen einer
der beiden Freilaufnaben und der Welle ein Umkehrgetriebe
mit dem Übersetzungsverhältnis 1 angeordnet ist und wobei
die beiden anderen Umlenkräder mittels einer drehbar gelagerten
Achse fest miteinander verbunden sind. Hierbei ist das
Antriebselement aus zwei Trittbügeln gebildet, die auf dem
vorderen Trum des einen und auf dem hinteren Trum des anderen
Umlauftriebes befestigt sind. Die Bewegung eines jeden der
beiden Trittbügel nach unten bewirkt eine Drehrichtung der
mit dem Kettenrad eines Fahrradantriebes versehenen Welle
in einer einzigen Drehrichtung. Gleichzeitig mit der Bewegung
eines Trittbügels nach unten wird über die drehbar gelagerte
Achse der am anderen Umlauftrieb angebrachte Trittbügel wieder
nach oben in die Ausgangsstellung bewegt. Hierdurch wird die
leistungsvermindernde Sinusverzerrung des herkömmlichen
Tretantriebes eines Fahrrades vermieden und es wird ein
praktisch verlustloser Übergang von der senkrechten oszillierenden Linearbewegung der beiden Tretbügel in die kontinuierliche Drehbewegung der drehbar gelagerten Welle gleicher
Drehrichtung umgesetzt.

Über die beschriebene horizontale und senkrechte Anordnung
der Antriebsvorrichtung hinaus zeigt sich in der Schräglage der Umlauftriebe der Antriebsvorrichtung auch bei einem
Liegefahrrad der besondere Vorteil darin, daß nicht nur
das Körpergewicht des Fahrers nach dem Gesetz actio gleich
reactio wirkt, sondern der Fahrer seine Kräfte unabhängig
vom Körpergewicht einsetzen kann, wobei sich der Fahrer
gegen eine Rückenlehne stemmen kann, wobei eine Antriebskraft von bis zu 240 kg erzielt wird, welche fast verlustlos in das Drehmoment der als Antriebswelle wirkenden, mit
dem Kettenrad versehenen drehbaren Welle übergeleitet werden.

Die Erfindung ist nachfolgend anhand mehrerer Ausführungsbeispiele von Antriebsvorrichtungen näher erläutert. Es
zeigen:

Fig. 1    eine vereinfacht dargestellte Perspektivansicht der Antriebsvorrichtung für ein mit
Muskelkraft angetriebenes Fahrzeug,

Fig. 2    eine vereinfacht dargestellte Perspektivansicht der Antriebsvorrichtung für ein mittels
eines Linearmotors angetriebenes Fahrzeug,

Fig. 3    eine vereinfachte Darstellung der Antriebsvorrichtung gemäß Fig. 2 in der Anordnung an
einer angetriebenen Achse eines Kraftfahrzeuges,

Fig. 4    eine vereinfacht dargestellte Perspektivansicht
der Anordnung der Antriebsvorrichtung bei einem
Fahrrad und

Fig. 5    eine vereinfachte Darstellung der Antriebsvorrichtung mit nur einem Umlauftrieb.

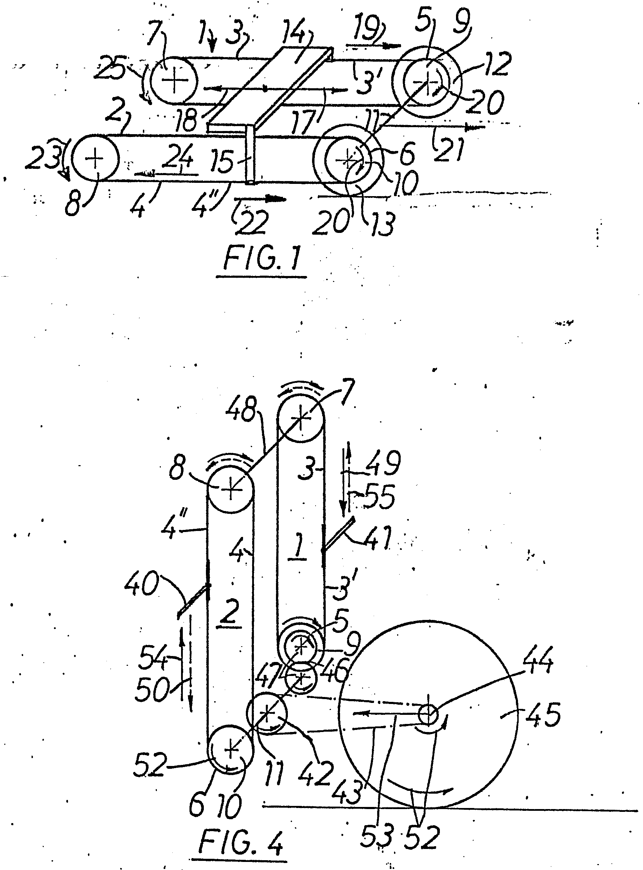

Die Antriebsvorrichtung gemäß Fig. 1 umfaßt zwei parallele
Umlauftriebe 1,2 aus endlosen Gliederketten 3,4, welche je
um zwei Umlenkräder 5,7 bzw. 6,8 umlaufen. Die Umlenkräder
5,6 sitzen auf Freilaufnaben 9,10, die auf einer drehbaren Welle 11 gelagert sind. Diese trägt an ihren beiden Enden jeweils Laufräder 12,13. Die beiden Umlenkräder 7,8 sind auf Achsen drehbar gelagert, welche in einem nicht näher dargestellten, die Antriebsvorrichtung aufnehmenden Fahrzeugrahmen gelagert sind.

Ein auf nicht näher dargestellten Führungen gelagerter Rollsitz 14 ist auf einer Seite mit dem Obertrum 3' des Umlauftriebes 1 und auf der anderen Seite mit dem Untertrum 4'' des Umlauftriebes 2 festverbunden, wobei zur Verbindung ein Steg 15 dient. Der als Antriebselement dienende Rollsitz/14 wird durch Muskelkraft eines Fahrers* in eine hin- und hergehende Linearbewegung versetzt, welche durch Pfeile als Vorhub 17 und Rückhub 18 dargestellt sind.

      * oder bei mehreren Rollsitzen mehrerer Fahrer
Der Achsabstand zwischen den vorderen Umlenkrädern 5, 6 und den hinteren Umlenkrädern 7,8 der Umlauftriebe 1 bzw. 2 ist mindestens so groß wie der maximale Hub des Rollsitzes 14, wobei der maximale Hub gleich ist dem Vorhub 17 bzw. dem Rückhub 18.

Die Fig. 1 zeigt etwa die Mittelstellung des Rollsitzes 14 zwischen dessen beiden Endstellungen. Beim Vorhub des Rollsitzes 14 in Richtung des Pfeiles 17 wird der Obertrum 3' des Umlauftriebes 1 in Richtung des Pfeiles 19 mitgenommen, wobei über die Kopplung des Freilaufes 9 des vorderen Umlenkrades 5 mit der drehbar gelagerten Welle 11 beide Laufräder 12,13 in Drehrichtung gemäß den Pfeilen 20 mitgenommen werden, wodurch ein Vortrieb in Richtung des Pfeiles 21 erzeugt wird.

Gleichzeitig wird der Untertrum 4'' des anderen Umlauftriebes 2 in Richtung des Pfeiles 22 nach vorn mitgenommen, wobei der Umlauftrieb 2 jedoch unter Wirkung der Freilaufnabe 10 leer zurückläuft, wobei die Umlenkräder 6 und 8 des Umlauftriebes 2

- 7 -

in Richtung der Pfeile 23 gedreht werden , während das Laufrad 13 in Drehrichtung gemäß Pfeil 20 weiterläuft .

Beim Rückhub des Rollsitzes 14 gemäß Pfeil 18 erfolgt eine
entsprechend umgekehrte Bewegung. Hierbei wird der Untertrum
4'' des Umlenktriebes 2 in Richtung des Pfeiles 24 vom
Rollsitz 14 mitgenommen, wobei die Umlenkräder 6,8 in
Richtung des Pfeiles 20 gedreht werden. Die Freilaufnabe 10
des Umlenkrades 6 ist hierbei mit der drehbar gelagerten
Welle 11 in Antriebsrichtung verbunden, wodurch die beiden
Laufräder 12,13 in Richtung der Pfeile 20 mitgenommen werden
und das gesamte Fahrzeug einen Vortrieb in Richtung des
Pfeiles 21 erhält. Gleichzeitig wird der Umlauftrieb 1 in
seine Ausgangsstellung zurückgeführt, wobei die Umlenkräder
5,7 unter Wirkung des Freilaufes 9 in Richtung der Pfeile 25
zurückgedreht werden.

Bei jedem Doppelhub des als Rollsitz 14 ausgebildeten Antriebselementes , welches durch äußere oszillierende Muskelkräfte
des Fahrers angetrieben wird, macht die Antriebswelle 11
der beiden Freilaufnaben 9,10 eine dem Hin- und Herweg des
Rollsitzes 14 proportionale Drehbewegung gleicher Drehrichtung,
wodurch die oszillierenden Linearkräfte unter Berücksichtigung
maximaler Verlustminimierung in Drehbewegung gleichbleibender
Drehrichtung und damit in einen kontinuierlichen Vortrieb
gemäß Pfeil 21 umgeleitet werden.

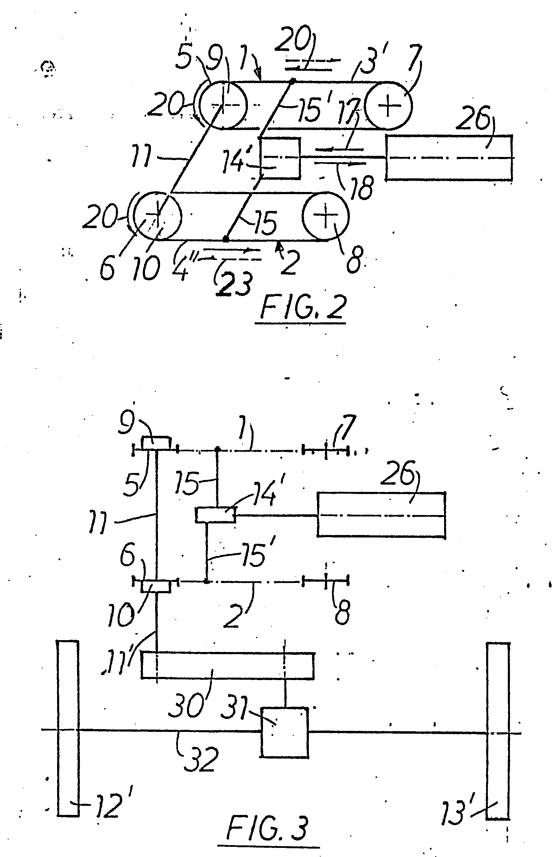

Bei der Antriebsvorrichtung in der in Fig. 2 dargestellten
Ausführungsform sind die Umlauftriebe 1,2 mit im nicht
dargestellten Fahrzeugrahmen drehbar gelagerten Umlenkrädern
7,8 und mit Freilaufnaben 9,10 versehenen Umlenkrädern 5
bzw. 6 in der Ausführungsform gemäß Fig. 1 entsprechender
Weise ausgebildet, wobei die beiden Freilaufnaben 9,10
durch die drehbar gelagerte Welle 11 miteinander verbunden
sind. Das Antriebselement ist hierbei der Kolbenstangenkopf
14' eines Linearmotors 26, dessen Kolbenstangenkopf 14' über

0190988

zwei Stegbügel 15 bzw. 15' mit dem Untertrum 4'' des Umlauftriebes 2 bzw. mit dem Obertrum 3' des Umlauftriebes 1
festverbunden sind. Der Linearmotor 26 ist ein Kurbelwellenloser 2-Zylinder-Boxermotor.

In gleicher Weise wie bei der ersten Ausführungsform wird beim
Vorhub in Richtung des Pfeiles 17 über den Obertrum 3' des
Umlauftriebes 1 das Umlenkrad 5 in Drehrichtung 20 mitgenommen, wobei über die Freilaufnabe 9 die drehbar gelagerte
Welle 11 in Drehrichtung gemäß Pfeil 20 in eine rotierende
Arbeitsbewegung versetzt wird.Gleichzeitig wird der Umlauftrieb 2 in Pfeilrichtung 23 mittels der Freilaufnabe 10
zurückgedreht. Beim Rückhub 18 erfolgt die entsprechend
umgekehrte Bewegung.

Wesentlich für die in den Fig. 1 und 2 dargestellten Antriebsvorrichtungen ist, daß die beiden Freiläufe 9,10 gleichen
Drehsinn für die Mitnahme der gemeinsamen, drehbaren Welle 11
aufweisen.

Die Fig. 3 zeigt die Anordnung der Antriebsvorrichtung gemäß
Fig. 2 an der Hinterachse eines Fahrzeuges. Hierzu ist die
drehbare Welle 11 mittels eines Wellenstückes 11' verlängert,
welches in ein Getriebe 30 geführt ist . Das Getriebe 30
treibt über ein Differential 31 die Hinterachse 32 eines mit
den Laufrädern 12',13' versehen Fahrzeuges.

Anstelle von Ketten 3,4 können für die Umlauftriebe auch Zahnriemen verwendet werden.

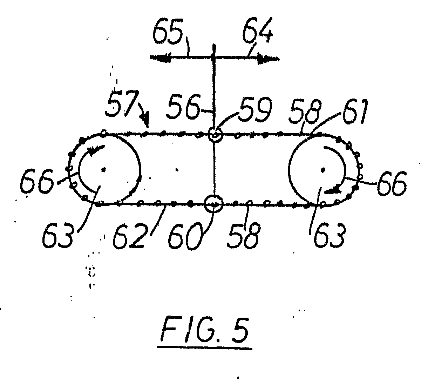

In der Fig. 4 ist eine weitere Ausführungsform der Antriebsvorrichtung in Anwendung bei einem Fahrrad dargestellt. Hierbei
sind die beiden Umlauftriebe 1,2 um 90° gegenüber der Horizontalen hochkant gestellt. Die Ketten 3,4 tragen anstelle
eines gemeinsamen Antriebselementes je einen Trittbügel 40,41,

welche am vorderen Trum 4'' des Umlauftriebes 2 bzw. am hinteren Trum 3'' des Umlauftriebes 1 befestigt sind. Die drehbare Welle 11 trägt ein Kettenrad 42 eines Kettentriebes 43, welcher über ein Ritzel 44 das Hinterrad 45 des Fahrrades antreibt. Zwischen der Freilaufnabe 9 des Umlenkrades 5 des Umlauftriebes 1 und der drehbar gelagerten Welle 11 ist ein Umkehrgetriebe 46 angeordnet, das aus zwei in Eingriff stehenden Zahnrädern 47 mit gleichen Zähnezahlen gebildet ist, so daß das Übersetzungsverhältnis 1 ist. Das Umkehrgetriebe 46 bewirkt eine Umkehr der Drehrichtung des mit der Freilaufnabe 9 versehenen Umlenkrades 5 des Umlauftriebes 1.

Im Gegensatz zu den Antriebsvorrichtungen gemäß den Fig. 1 und 2 sind bei der Antriebsvorrichtung gemäß Fig. 4 ferner die beiden anderen Umlenkräder 7,8 durch eine gemeinsame, drehbar gelagerte Achse 48 fest miteinander verbunden. Diese drehbare Achse 48 bewirkt, daß bei einer Abwärtsbewegung des Trittbügels 41 des Umlauftriebes 1 zwangsläufig der Trittbügel 40 des Umlauftriebes 2 nach aufwärts bewegt wird und umgekehrt.

Die Anordnung dieser Antriebsvorrichtung ist derart getroffen, daß sowohl die Abwärtsbewegung des Trittbügels 41 in Richtung des Pfeiles 49 als auch die Abwärtsbewegung des Trittbügels 40 in Richtung des Pfeiles 50 jeweils über die Freilaufnaben 9,10 und über das Umkehrgetriebe 46 eine Drehbewegung der drehbar gelagerten Welle 11 in Richtung der Pfeile 52 erzeugen, welche einen Vortrieb des Fahrrades in Richtung des Pfeiles 53 bewirken. Die jeweiligen Rückbewegungen der Trittbügel 40,41 in Richtung der Pfeile 54 bzw. 55 erfolgen unter Wirkung der Freilaufnaben 9 bzw. 10 als Leerhübe.

Durch die Antriebsvorrichtung gemäß Fig. 4 wird die leistungsvermindernde Sinusverzerrung des herkömmlichen Tretantriebes eines Fahrrades total vermieden. Es wird ein praktisch verlustloser Übergang von der senkrechten, oszillierenden Linearbewegung der beiden Trittbügel 40,41 in die Drehbewegung der
drehbar gelagerten Welle 11 gleicher Drehrichtung bewirkt.
Durch die gemäß den Antriebsvorrichtungen nach Fig. 1 und
Fig. 2 anders ausgebildete Krafteinleitung nicht mittels
eines gemeinsamen Antriebselementes 14, 14', sondern mittels
zweier separater Trittbügel 40, 41, muß der eine der beiden
Freiläufe 9,10, nämlich der Freilauf 9, auf der zusätzlichen
Übersetzung 46, 47 angeordnet sein, welche die hier erfolgende
entgegengesetzte Drehrichtung wieder gleichrichtet.

Die Fig. 5 zeigt eine Ausführungsform der Antriebsvorrichtung
mit nur einem Umlauftrieb 57, der um zwei auf Abstand befindliche , auf gehäusefesten Achsen drehbar gelagerte Umlenkräder 63 umläuft . Diese Umlenkräder 63 benötigen keine Freiläufe . Das Antriebselement 56 trägt parallel zum Ober - und
Untertrum 61 bzw. 62 des Umlauftriebes 57 geführte Kupplungen
59,60 und der Umlauftrieb 57 trägt mehrere , mit den Kupplungen
59,60 kuppelbare Platten 58 . Die Kupplungen 59,60 können als
Klemmkupplungen oder als elektromagnetische Kupplungen ausgebildet weisn , welche das Antriebselement 56 im geöffneten
Zustand nicht mitnehmen , aber im geschlossenen Zustand in
Bewegungsrichtung , z.b. im Uhrzeigersinn mitnehmen . Das
Antriebselement 56 kann motorisch oder mit Muskelkraft betätigt werden . Durch abwechselndes Einschalten der Kupplung 59
mit dem Obertrum 61 bei einer Bewegung des Antriebselementes 56
von links nach rechts in Richtung des Pfeiles 64 und der
Kupplung 60 mit dem Untertrum 62 bei der Rückbewegung des Antriebselementes 56 von rechts nach links in Richtung des
Pfeiles 65 wird eine ununterbrochene Umlaufbewegung des Umlauftriebes 57 in Uhrzeigerrichtung gemäß den Pfeilen 66
erzeugt . Entsprechendes gilt für die umgekehrte Bewegung .

0190988

Albrecht & Lüke, Gelfertstr. 56, D-1000 Berlin 33

Patentanwälte
Dipl.-Ing. Hans Albrecht ($^{1933}_{1979}$)
Dipl.-Ing. Dierck-Wilm Lüke
European Patent Attorney

Gelfertstraße 56
D-1000 Berlin 33
Telefon: (030) 8313028
Telegramme: Patentalbrecht Berlin

Ihr Zeichen     Ihre Nachricht     Unser Zeichen     Datum

10984/L/Lü   5.Februar 1985

P a t e n t a n s p r ü c h e
----------------------------------

1. Antriebsvorrichtung zur Umsetzung der Linearbewegung eines hin- und hergehenden Antriebselementes mittels eines endlosen Umlauftriebes, z. B. mittels einer um zwei Umlenkräder umlaufenden Gliederkette oder mittels eines Zahnriemens, in eine rotierende Antriebsbewegung, d a d u r c h  g e k e n n z e i c h n e t, daß das Antriebselement (14,14') beim Vorhub (17) mit dem Obertrum (3') und beim Rückhub (18) mit dem Untertrum (4'') des Umlauftriebes (1,2) gekoppelt ist und daß der Achsabstand der Umlenkräder (5,7; 6,8) des Umlauftriebes (1,3) mindestens so groß ist wie der Vorhub (17) bzw. Rückhub (18) des Antriebselementes (14,14').

2. Antriebsvorrichtung nach Anspruch 1, dadurch gekennzeichnet, daß das Antriebselement (56) parallel zum Ober- und Untertrum (61 bzw. 62) des Umlauftriebes (57) geführte Kupplungen (59,60) und der Umlauftrieb (57) mehrere mit den Kupplungen (59,60) kuppelbare Platten (57,58) tragen .

**0190988**

3. Antriebsvorrichtung nach Anspruch 2 , dadurch gekennzeichnet , daß die Kupplungen (59,60) als Klemmkupplungen ausgebildet sind , welche das Antriebselement (56) im geöffneten Zustand nicht mitnehmen , aber im geschlossenen Zustand das Antriebselement (56) in Bewegungsrichtung mitnehmen .

4. Antriebsvorrichtung nach Anspruch 1, dadurch gekennzeichnet , daß zwei parallele Umlauftriebe (1,2) vorgesehen sind, daß zwei gegenüberliegende Umlenkräder (5,6) der Umlauftriebe (1,2) auf miteinander durch eine drehbar gelagerte Welle (11) verbundenen Freilaufnaben (9,10) gleichen Drehsinnes gelagert sind und daß das Antriebselement (14,14') mit dem Obertrum (3') des einen Umlauftriebes (1) und mit dem Untertrum (4'') des anderen Umlauftriebes (2) festverbunden ist.

5. Antriebsvorrichtung nach Anspruch 4, dadurch gekennzeichnet, daß die drehbare Welle (11) ein Kettenrad (42) eines Fahrradantriebes (43) trägt, daß zwischen einer der beiden Freilaufnaben (9) und der Welle (11) ein Umkehrgetriebe (46,47) mit der Übersetzung (1) angeordnet ist, daß die beiden anderen Umlenkräder (7,8) mittels einer drehbar gelagerten Achse (48) fest miteinanderverbunden sind und daß das Antriebselement aus zwei Trittbügeln (40,41) gebildet ist, die auf dem vorderen Trum (4'') des einen Umlauftriebes (2) bzw. auf dem hinteren Trum (3') des anderen Umlauftriebes (1) festangebracht sind.

6. Antriebsvorrichtung nach einem der vorangegangenen Ansprüche, dadurch gekennzeichnet , daß das Antriebselement (14') mittels eines kurbelwellenlosen Boxermotors (26) angetrieben ist .

0190988

FIG. 1

FIG. 4

_FIG. 2_

_FIG. 3_

0190988

_FIG. 5_